# EUROPEAN PATENT APPLICATION

(11) **EP 2 325 759 A1**
(43) Date of publication of application: **25.05.2011**
(21) Application number: 10014108.4
(22) Date of filing: 29.10.2010
(51) Int. Cl.: G06F 17/30

(54) **Database schema**

(30) Priority: 02.11.2009 EP 09013736
(71) Applicant: DAD Solutions Limited, Farnham, Surrey GU10 3BP (GB)
(72) Inventor: Corner, Chris, Andover, Hampshire SP10 2UA (GB)
(74) Representative: Downing, Michael Philip

(57) **Abstract**

We propose an innovative approach to an XML structure in which the XML Schema can be subject to user-driven variation. This could be achieved via a file indexing system for recording attributes of a plurality of files, comprising an XML document, an associated XML schema, defining the attributes of the files that are to be recorded in the XML document, a parser for interpreting the XML document under the control of the schema, and a user interface for presenting the output of the parser to a user, said output comprising a plurality of metadata tags and respective content associated with said metadata tags, and for accepting user instructions editing said output, wherein the user interface is arranged to accept instructions defining a new metadata tag that is absent from the schema and content for said new metadata tag, and to amend the schema automatically so as to introduce the new metadata tag. The fact that the user is editing an XML schema is ideally something that is hidden from the user. All amendments should be subject to an enforced compliance with an overall information model. Where the XML schema exists in several locations on the same network, other instances of the schema can inherit additional tags from an updated XML schema on the same network. The overall information model should enforce that the XML schema can only be added to; existing tags cannot be deleted by a user.

## Description

### FIELD OF THE INVENTION

The present invention relates to a database schema.

### BACKGROUND ART

The format known as "eXtensible Mark-up Language" (XML) is a method of tagging data items with descriptors that give information as to the nature of the data items, and is widely accepted throughout industry and governments. The tags used generally describe the meaning of the data, and are defined by the developer at the outset with a view to setting out a structure for the data items that will meet the needs of the system being developed. Information is required as to the set of tags that are permitted in the specific type of XML document being designed. XML schemas allow developers to specify the structure of XML documents and the data types permitted within those documents.

The XML documents and resources that are created and updated when the user accesses the tool therefore comply with the XML schema originally created by the developer. Care and forethought are therefore needed in the creation of the XML schema.

### SUMMARY OF THE INVENTION

An XML structure is (potentially) a very powerful tool for retaining and sharing data across platforms. However, as set out in our application no: EP09251937.0, filed on 5 August 2009, we wish to create a data structure that permits the retention of data relating to files held on a local network, typically a home network. Whilst some file types are predictable, such as images, video, and text, there may be others that are specific to a local installation meaning that the available list will either be too restrictive or too unwieldy. In addition, a generic type such as "image" includes a very wide range of possible subtypes that will be individual to a specific user and which the user will wish to use as the basis for a tag of some sort.

We therefore propose an innovative approach to an XML structure in which the XML Schema can be subject to user-driven variation. Rather than limit the user to a schema fixed at the design stage by the software developers, we propose to provide users with the capability to add new tags to the XML schema. This allows the user to add his/her own meanings to their data.

This could be achieved via a file indexing system for recording attributes of a plurality of files, comprising an XML document, an associated XML schema, defining the attributes of the files that are to be recorded in the XML document (e.g. the metadata tags and a structure for those metadata tags), a parser for interpreting the XML document under the control of the schema, and a user interface for presenting the output of the parser to a user, said output comprising a plurality of metadata tags and respective content associated with said metadata tags, and for accepting user instructions editing that output. The user interface is arranged to accept instructions defining a new file attribute (e.g. a new metadata tag) that is absent from the schema and content for that file attribute, and to amend the schema automatically so as to introduce the new file attribute.

The fact that the user is editing an XML schema is ideally something that is hidden from the user. For example, in an embodiment, the user interface displays the plurality of metadata tags and their respective content (i.e. the output of the parser), but not the XML schema structure.

All amendments should be subject to an enforced compliance with an overall information model.

Where the XML schema exists in several locations on the same network, other instances of the schema can inherit additional tags from an updated XML schema on the same network.

The overall information model should enforce that the XML schema can only be added to; existing tags cannot be deleted by a user.

### DETAILED DESCRIPTION OF THE EMBODIMENTS

An embodiment of the present invention will now be described by way of example. For the purposes of the example, consider the Index metadata structure shown in Sample 1. This is a metadata structure allowing file objects such as Image files and Audio files to be described. Each file has a file name and a date created metadata tag, regardless of its file type. However, other metadata tags are relevant only to specific file types, for example Camera Maker and Camera Model are relevant to Image files but not to Audio files, and Composer and Track Number are relevant to Audio files but not Image files.

```
      <File Object>
        <File Name>
        <Title>
        <Date Created>
        <Date Added>
        <Size>
      ...
        <File Type>Image
          <Camera Maker>
              <Camera Model>
              <Lens Maker>
              <Lens Model>
              <Flash Mode>
              <Focal Length>
                 <Dimensions>
      ...
      ...
        <File Type>Audio
              <Composer>
              <Track Number>
              <Play Count>
              <Beats Per Minute>
      ...
```

### Sample 1 - Example Index Metadata Structure

The initial Index metadata structure is detailed in an XML schema document which is provided with the system. However, the structure and tags of the Index metadata structure may not be suitable for or exactly meet the requirements of certain users.

For example, consider a user whose interest is in dog breeds and breeding. He is interested in retaining details of image files, but the image-specific tags such as Focal Length or Camera Model are not of interest to him. He is more interested in tags which describe in more detail the subject of and background to the image files.

However, the Index metadata structure supplied by default with the system cannot provide tags for every specific possible area of user interest. There are simply too many possibilities and tags selected by non-experts (e.g. the system developers) for a particular subject area are unlikely to be the optimum selection.

Accordingly, the system allows the users to add their own tags to the Index metadata structure, these user defined tags being known as Context Data. Such context data tags added by the user are then added to the Index metadata structure and become available through the system for searching, pull-down menus, population by the user, and any other capability allowed for any of the Index metadata tags.

Consider the example of the dog breeder. With the standard metadata set, he would be able to populate the tags for an image file of a dog as shown in Sample 2:

```
     <File Object>Object1
       <File Name>Ollie1</Name>
       <Title>Ollie Asleep on Bed</Title>
       <Date Added>29/07/2009</DateAdded>
       <Size> 17.6KB</Size>
       <File Type>Image</FileType>
       <Dimensions>345 x 240</Dimensions>
```

### Sample 2 -Example of Tag Population of Standard Metadata Structure

However, because the system allows the user to add his own tags which are then stored in an updated version of the Index metadata structure, he is able to add his own tags to meet his specific requirements. The system allows him to specify the type of information held by the tag, such as a date format, a text format, etc to ensure that the content is appropriately formatted.

In our example, the dog breeder user adds new context data tags and specifies their types as shown in Sample 3.

```
     <Breed> ----------------- Type = Text Format
     <Kennel Name> --------- Type = Text Format
     <Date Of Birth> --------- Type = Date Format
```

### Sample 3 - Context Data Tags

The user is then able to populate the context data tags associated with each of his indexed files, as shown in Sample 4:

```
     <File Object>Object1
       <Breed>Cocker Spaniel</Breed>
       <Kennel Name>Spark of Golden Sunshine</Kennel Name>
       <Date Of Birth>28/03/2002</Date Of Birth>
```

### Sample 4 - Context Data Tags Population

The populated context data tags provide information which may be of use to other users on the network of systems. However, initially their Index metadata structures will not contain the context data tags added by other users. This means the new context data tags cannot be searched and do not appear for selection on menus and other dialogs. Accordingly, when the index data is synchronised (either manually or automatically) the Index metadata structure is automatically updated to add the new context data tags to all system indexes which synchronise to the system on which the tags have been added.

Thus, in our example, on synchronisation of index data between system instances, the added context data tags Breed, Date of Birth and Kennel Name would be added to the Index metadata structure of all system instances which synchronise with a system on which those tags have been added. The tags then become available through the system user interface for selection, viewing, population, etc.

Such system Index metadata could be shared more widely than a family network, such as over the internet via a web service adapted to analyse the metadata being passed across it. One of those analysis steps is to store, categorise and assess context data tags added by users. This may, for example, reveal that substantially the same context data tags have been added by a large number of system users. Such tags may well indicate that the default Index metadata structure is lacking fundamental metadata that is required by a significant number of users. It will then be a development decision whether to add the context data tags so identified to the Index metadata structure as provided with the system.

Once context data tags have been added to the Index metadata structure provided with the system, this will be provided to all system users through the standard update process of providing system updates to registered users. In such a way the Index metadata structure will be optimised for all users as time goes by, through the natural use of the system.

To explain further, when editing a metadata schema conventionally, a developer is presented with a schema something like this:

```
 <File Object>
 <File Name>
 <Title>
 <Date Created>
 <Date Added>
 <Size>
 ...
 <File Type>Image
 <Camera Maker>
 <Camera Model>
 <Lens Model>
 <Flash Mode>
 <Focal Length>
 <Dimensions>
```

That is, the metadata tags are shown rather than the content itself. When adding a new tag (conventionally) the developer locates the correct place in the schema structure and adds the new tag (e.g. <Lens Maker>) by making it a child of the higher level element in the schema.

```
 ...
 <File Type>Image
 <Camera Maker>
 <Camera Model>
 <------ add new tag as child <Lens Maker>
 <Lens Model>
 <Flash Mode>
 <Focal Length>
 <Dimensions>
```

According to embodiments of the present invention, the user does not see this schema structure, but rather sees the metadata tags and their content once an XML document has been parsed and output to the user interface. The output may be in a tabular form, for example:

| File Type | Camera Maker | Lens Model | Flash Mode | etc |
|---|---|---|---|---|
| Image | Toshiba | 35 mm | On | ... |

The user can then add a new metadata tag, name it and add data to it in a single view, so adding the Lens Maker tag as shown below:

| File Type | Camera Maker | Lens Model | Lens Maker | Flash Mode | etc |
|---|---|---|---|---|---|
| Image | Toshiba | 35 mm | Canon | On | ... |

However, because the user interface is displaying image files and their metadata, the system updates the schema as well, adding the <Lens Maker> metadata tag to the schema. However, this is hidden from the user because he does not see the schema structure itself.

As described above, the updated schema is then shared with other users and they too can make use of the new tag and the data that has already been added to it. In this way, embodiments of the present invention will allow schemas to evolve with use and become optimised, rather than being defined in advance by a developer.

It will of course be understood that many variations may be made to the above-described embodiment without departing from the scope of the present invention.

## Claims

1. A file indexing system for recording attributes of a plurality of files, comprising
an XML document,
an associated XML schema, defining the attributes of the files that are to be recorded in the XML document,
a parser for interpreting the XML document under the control of the schema, and
a user interface for presenting the output of the parser to a user, said output comprising a plurality of metadata tags and respective content associated with said metadata tags, and for accepting user instructions editing said output, wherein
the user interface is arranged to accept instructions defining a new metadata tag that is absent from the schema and content for said new metadata tag, and to amend the schema automatically so as to introduce the new metadata tag.

2. A file indexing system according to claim 1 in which the user interface displays the plurality of metadata tags and their respective content, but not the XML schema structure.

3. A file indexing system according to claim 1 or claim 2, further comprising an information model defining acceptable parameters for modification of the XML schema, and in which the user interface compares an instruction to the information model and refuses an instruction if it lies outside those parameters.

4. A file indexing system according to any one of the preceding claims, distributed over a computer network, wherein the XML schema exists in several locations on the network, further comprising a means for adding additional tags from an updated XML schema to other instances of the schema on the network.

5. A file indexing system according to any one of the preceding claims, in which the user interface is adapted to refuse instructions to delete a file attribute from the XML schema.
